# EUROPEAN PATENT APPLICATION

(11) **EP 1 298 930 A2**
(43) Date of publication of application: **02.04.2003**
(21) Application number: 02256774.7
(22) Date of filing: 27.09.2002
(51) Int. Cl.: H04N 7/24

(54) **Method and apparatus for interleaving DOCSIS data with an MPEG video stream**

(30) Priority: 27.09.2001 US 963670
(71) Applicant: Broadcom Corporation, Irvine, CA 92618-3616 (US)
(72) Inventor: Dworkin, David Roger, Alpharetta, Georgia 30005 (US); Pantelias, Niki R., Duluth, Georgia 30096 (US)
(74) Representative: Skone James, Robert Edmund

(57) **Abstract**

A cable modem system and method is provided for interleaving MPEG video data frames with DOCSIS data frames. A cable modem system in accordance with the invention includes a cable modem termination system (CMTS) that is adapted to detect the presence of null packets in an MPEG video data stream and insert DOCSIS data frames in there place. The source of the MPEG video data stream determines the clock rate at which the MPEG data stream is routed through the CMTS.

## Description

The present invention is generally related to communication systems. More particularly, the present invention is related to cable modem systems and methods for transferring data.

In conventional cable modem systems, a hybrid fiber-coaxial (HFC) network provides a point-to-multipoint topology for supporting data communication between a cable modem termination system (CMTS) at the cable headend and multiple cable modems (CM) at the customer premises. In such systems, information is broadcast downstream from the CMTS to the cable modems as a continuous transmitted signal in accordance with a time division multiplexing (TDM) technique.

Conventional cable modem systems utilize DOCSIS-compliant equipment and protocols to carry out the transfer of data packets between multiple cable modems and a CMTS. The term DOCSIS (Data Over Cable System Interface Specification) generally refers to a group of specifications published by CableLabs that define industry standards for cable headend and cable modem equipment. In part, DOCSIS sets forth requirements and objectives for various aspects of cable modem systems including operations support systems, management, data interfaces, as well as network layer, data link layer, and physical layer transport for data over cable systems. The most current version of the DOCSIS specification is DOCSIS 1.1.

Cable modem systems are used to transmit data streams carrying for example, DOCSIS data frames and MPEG video frames. It has been observed, that the use of proprietary data transfer protocols may be advantageous in conserving network bandwidth in a cable modem system. This is particularly true with respect to the transmission of MPEG video frames. A conventional MPEG video data stream is comprised of data frames containing image data and data frames that contain nothing, i.e., idle or null frames. Because the null frames fail to convey useful data, the transmission of these null frames is a waste of valuable bandwidth. It would be desirable to reduce, if not all together eliminate, the transmission of null frames. In particular, it would be desirable to interleave DOCSIS data frames with MPEG video frames in such a way as to eliminate the transmission of null frames.

The present invention is directed to a cable modem system that allows for MPEG and DOCSIS data to be transmitted more efficiently. More particularly, the present invention provides a system and method for interleaving MPEG video frames with DOCSIS data frames into a single output MPEG data stream. In an embodiment, the cable modem termination system is provided with a media access control device. The media access control device receives an input data stream comprised of a plurality of MPEG video frames to be transmitted. Some of the MPEG video frames contain data, while others are empty. Next, the media access control device identifies which of the received MPEG video frames are null. The media access control device then replaces the null MPEG video frames with DOCSIS data frames to produce an output data stream.

The accompanying drawings, which are incorporated herein and form a part of the specification, illustrate the present invention and, together with the description, further serve to explain the principles of the invention and to enable a person skilled in the pertinent art to make and use the invention.

FIG. 1 is a high level block diagram of a cable modem system in accordance with embodiments of the present invention.

FIG. 2 is a schematic block diagram of a cable modem termination system (CMTS) in accordance with embodiments of the present invention.

FIG. 3 is a schematic block diagram of a media access control device in accordance with embodiments of the present invention.

FIG. 4 is a flowchart of a method for supporting data interleaving in a cable modem system in accordance with embodiments of the present invention.

FIG. 5A is a block diagram of a MPEG video stream received in accordance with embodiments of the present invention.

FIG. 5B is a block diagram of an interleaved output data stream in accordance with embodiments of the present invention.

The present invention will now be described with reference to the accompanying drawings. In the drawings, like reference numbers indicate identical or functionally similar elements. Additionally, the left-most digit(s) of a reference number identifies the drawing in which the reference number first appears.

### A. Cable Modem System in accordance with Embodiments of the Present Invention

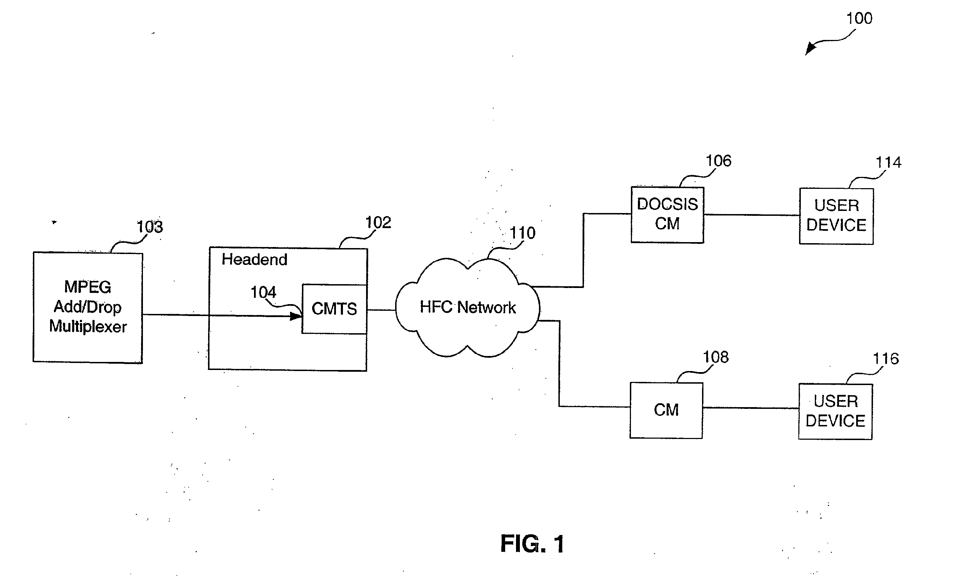

FIG. 1 is a high level block diagram of an example cable modem system 100 in accordance with embodiments of the present invention. The cable modem system 100 enables voice communications, video, and data services to be provided based on a bi-directional transfer of Internet protocol (IP) traffic between a cable system headend 102 and a plurality of cable modems 106 and 108 over a hybrid fiber-coaxial (HFC) cable network 110. In the example cable modem system 100, only two cable modems 106 and 108 are shown for clarity. In general, any number of cable modems may be included in the cable modem system of the present invention.

The cable headend 102 is comprised of at least one cable modem termination system (CMTS). The CMTS is the portion of the cable headend 102 that manages the upstream and downstream transfer of data between the cable headend 102 and the cable modems 106 and 108, which are located at the customer premises. The CMTS broadcasts information downstream to the cable modems 106 and 108 as a continuous transmitted signal in accordance with a time division multiplexing (TDM) technique. Additionally, the CMTS controls the upstream transmission of data from the cable modems 106 and 108 to itself by assigning to each cable modem 106 and 108 short grants of time within which to transfer data. In accordance with this time domain multiple access (TDMA) technique, each cable modem 106 and 108 may only send information upstream as short burst signals during a transmission opportunity allocated to it by the CMTS. In the example cable modem system 100, one CMTS device 104 is shown. In general, any number of CMTS devices may be included in the cable modem system of the present invention.as the requirements for a particular HFC network change. In this way, cable modem system is readily expandable.

As noted above, cable modem system 100 includes HFC network 110. The HFC network 110 provides a point-to-multipoint topology for the highspeed, reliable, and secure transport of data between the cable headend 102 and the cable modems 106 and 108 at the customer premises. As will be appreciated by persons skilled in the relevant art(s), the HFC network 110 may comprise coaxial cable, fiberoptic cable, or a combination of coaxial cable and fiberoptic cable linked via one or more fiber nodes.

Cable modem system 100 also includes cable modems 106 and 108. Each of the cable modems 106 and 108 operates as an interface between the HFC network 110 and at least one attached user device. In particular, the cable modems 106 and 108 perform the functions necessary to convert downstream signals received over the HFC network 110 into IP data packets for receipt by an attached user device. Additionally, the cable modems 106 and 108 perform the functions necessary to convert IP data packets received from the attached user device into upstream burst signals suitable for transfer over the HFC network 110. In the example cable modem system 100, each cable modem 106 and 108 is shown supporting only a single user device 114 and 116. In general, each cable modem 106 and 108 is capable of supporting a plurality of user devices for communication over the cable modem system 100. User devices may include personal computers, data terminal equipment, telephony devices, broadband media players, network-controlled appliances, or any other device capable of transmitting or receiving data over a packet-switched network.

In accordance with an embodiment of the present invention, cable modem system 100 further includes MPEG video add/drop multiplexer 103. MPEG video add/drop multiplexer 103 provides an MPEG video data stream to CMTS 104 which is in turn transmitted to the cable modems 106 and 108. The MPEG video data stream is comprised of an MP_CLK, MP_Data, MP_Valid, and MP_Sync. In the disclosed embodiment, MP_CLK is a byte rate clock set to operate at a maximum of 13.5 MB/sec. MP_Data represents MPEG data, such as video data and nulls. MP_valid is an active high signal used to indicate that valid data is found on MP_Data. MP_SYNC is an active high signal which is true during an MPEG sync byte.

### B. Example Cable Modem System Components in Accordance with Embodiments of the Present Invention

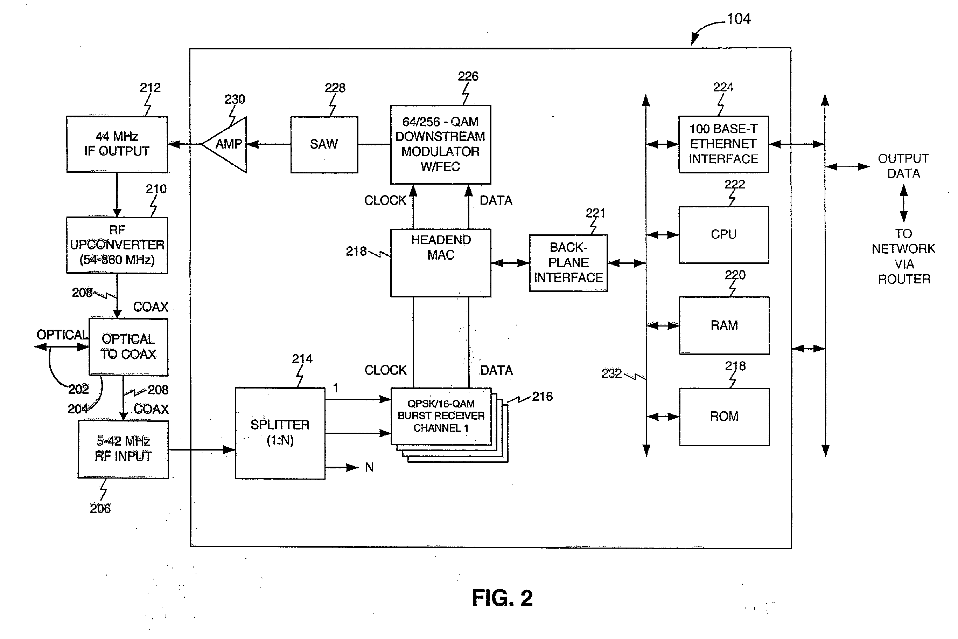

FIG. 2 depicts a schematic block diagram of an implementation of the CMTS 104 of cable modem system 100 shown in FIG. 1. The disclosed implementation is presented by way of example and is not intended to limit the present invention. The CMTS 104 is configured to receive and transmit signals to and from the HFC network 110, a portion of which is represented by the optical fiber 202 of FIG. 2. Accordingly, the CMTS 104 will be described in terms of a receiver portion and a transmitter portion.

The receiver portion includes an optical-to-coax stage 204, an RF input 206, a splitter 214, and a plurality of burst receivers 216. Reception begins with the receipt of upstream burst signals originating from one or more cable modems by the optical-to-coax stage 204 via the optical fiber 202. The optical-to-coax stage 204 routes the received burst signals to the radio frequency (RF) input 206 via coaxial cable 208. In embodiments, these upstream burst signals have spectral characteristics in the frequency range of roughly 5-42 MHz.

The received signals are provided by the RF input 206 to the splitter 214 of the CMTS 104, which separates the RF input signals into N separate channels. Each of the N separate channels is then provided to a separate burst receiver 216 which operates to demodulate the received signals on each channel in accordance with either a Quadrature Phase Shift Key (QPSK) or a Quadrature Amplitude Modulation (QAM) technique operating in the range of 16-QAM to 256-QAM. Each burst receiver 216 also converts the underlying information signals from an analog form to digital form. This digital data is subsequently provided to the headend media access control (MAC) 218.

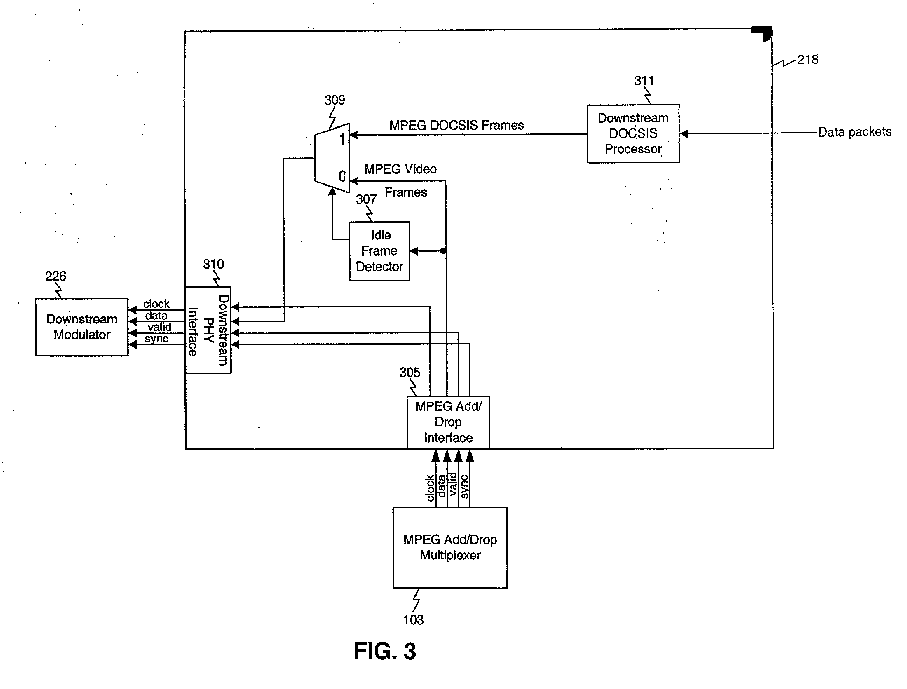

In accordance with embodiments of the present invention, one function of the headend MAC 218 is to interleave MPEG data frames received from MPEG video add/drop mux 103 with DOCSIS data frames prior to transmission to the cable modems 106 and 108. The functions of the headend MAC 218 may be implemented in hardware or in software. In the example implementation of FIG. 2, the functions of the headend MAC 218 are implemented both in hardware and software. The MPEG and DOCSIS interleaving functions of MAC 218 will be described in further detail below with respect to FIG. 3. Software functions of the headend MAC 218 may be stored in either the random access memory (RAM) 220 or the read-only memory (ROM) 218 and executed by the CPU 222. The headend MAC is in electrical communication with these elements via a backplane interface 221 and a shared communications medium 232. In embodiments, the shared communications medium 232 may comprise a computer bus or a multiple access data network.

The headend MAC 218 is also in electrical communication with the Ethernet interface 224 via both the backplane interface 221 and the shared communications medium 232. When appropriate, Ethernet packets recovered by the headend MAC 218 are transferred to the Ethernet interface 224 for delivery to the packet-switched network via a router.

The transmitter portion of the CMTS 104 includes a downstream modulator 226, a surface acoustic wave (SAW) filter 228, an amplifier 230, an intermediate frequency (IF) output 212, a radio frequency (RF) upconverter 210 and the optical-to-coax stage 204. Transmission begins with the generation of a digital broadcast signal by the headend MAC 218. The digital broadcast signal may include data originally received from the packet-switched network via the Ethernet interface 224. The headend MAC 218 outputs the digital broadcast signal to the downstream modulator 226 which converts it into an analog form and modulates it onto a carrier signal in accordance with either a 64-QAM technique, a 256-QAM technique, or higher.

The modulated carrier signal output by the downstream modulator 256 is input to the SAW filter 228 which passes only spectral components of the signal that are within a desired bandwidth. The filtered signal is then output to an amplifier 230 which amplifies it and outputs it to the IF output 212. The IF output 212 routes the signal to the RF upconverter 210, which upconverts the signal. In embodiments, the upconverted signal has spectral characteristics in the frequency range of approximately 54-860 MHz. The upconverted signal is then output to the optical-to-coax stage 204 over the coaxial cable 208. The optical-to-coax stage 204 broadcasts the signal via the optical fiber 202 of the HFC network 110.

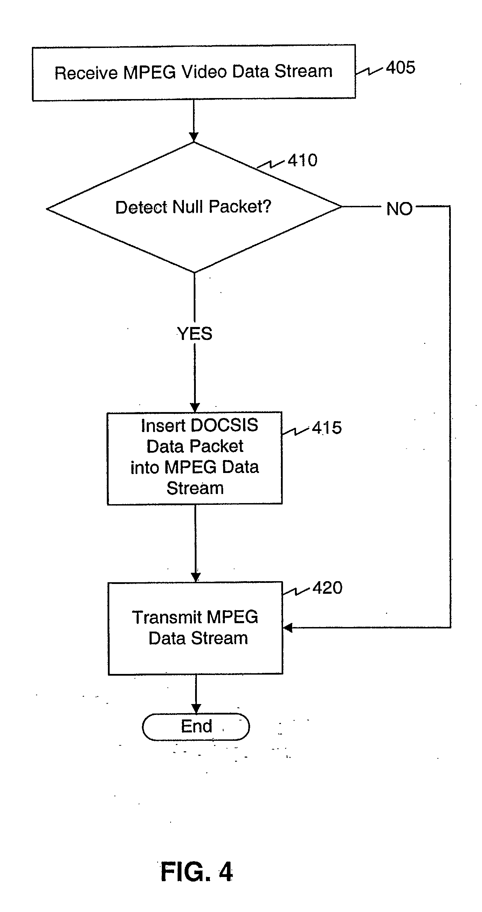

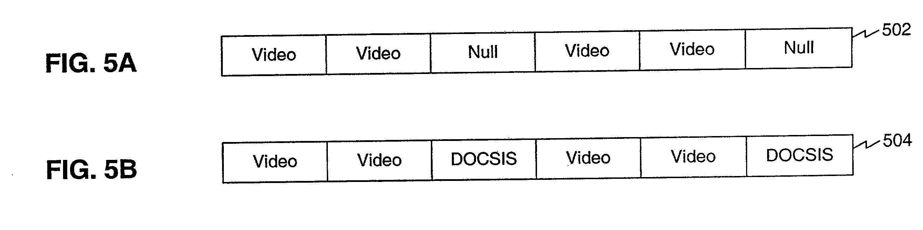

An embodiment of MAC 218 implemented in accordance with embodiments of the present invention will now be described with respect to FIG. 3. MAC 218 receives an MPEG video data stream via an MPEG add/drop interface 305. The MPEG add/drop interface 305 is connected to a Downstream PHY interface 310 and an idle frame detector 307. In this way, MPEG add/drop interface 305 is able to distribute the signals of the MPEG video data stream. In an embodiment, the MP_Data portion of the MPEG video data stream is provided to idle frame detector 307 for the purpose of detecting the presence of a null packet. The MP_Data portion is further passed through an interleaver mux 309. Interleaver mux 309 is used to provide an output MPEG data stream to downstream PHY interface 310. The output MPEG data stream is comprised of MPEG video data provided by MPEG add/drop multiplexer 103 and DOCSIS data frames provided by a DOCSIS data processor 311. The downstream PHY interface 310 provides connectivity to external physical devices such as downstream modulator 226. The delivery of the MPEG data stream will now be discussed with respect to FIGS. 4, 5A, and 5B.

Fig. 4 illustrates a method for interleaving MPEG video and DOCSIS data in accordance with an embodiment of the present invention.

In step 405, an MPEG data stream is provided to MPEG add/drop interface 305. Typically, downstream modulator 226 provides a clock signal to the downstream PHY interface 310. This clock signal is used to determine the rate at which downstream modulator 226 receives data streams. However, in accordance with the present invention, the MPEG video add/drop multiplexer 103 will determine the rate at which data streams are provided to the downstream PHY interface 310. MPEG video add/drop multiplexer 103 is designed to provide an MPEG video data stream comprised of video packets and null packets. The number of video packets and null packets can be tuned to each systems needs.

An example MPEG video stream is illustrated in FIG. 5A. In the example MPEG video data stream 502, MPEG video add/drop multiplexer 103 has been programmed to produce a data stream having two video packets followed by one null packet. The rate at which the MPEG data stream, for example, MPEG video data stream 502, is delivered to the MPEG add/drop interface 305 will determine the rate at which the MPEG data stream is sent out from MAC 218. In this way, the MPEG add/drop multiplexer 103 determines the clock signal rate for the CMTS 104.

In the disclosed embodiment, the clock signal rate cannot exceed 13.5 MB/sec because MPEG add/drop interface 305 is in communications with downstream PHY interface 310. To elaborate further, the mode in which the MPEG add/drop interface runs is determined based upon the mode in which the downstream PHY interface 310 is operating. For example, the downstream PHY interface 310 could be set to receive in either 188-byte mode, 204-byte mode with 16 dummy bytes, or 204 byte mode with 16 valid bytes. Accordingly, in the first example MPEG add/drop interface 305 must receive the MPEG data stream in 188-byte mode. Likewise, in the second and third examples, MPEG add/drop interface 305 must receive the MPEG data stream in 204 byte mode. In the disclosed embodiment, MPEG add/drop interface 305 receives the MPEG data stream in 204-byte mode with 16 bytes allocated for Forward Error Correction (FEC) insertion. The FEC bytes are used to check and correct the data being transmitted. In accordance with the present embodiment, downstream modulator 226 would compute and insert the FEC bytes into the MPEG data stream. Once the MPEG add/drop interface 305 receives the MPEG data stream, control passes to step 410.

In step 410, MPEG add/drop interface 305 provides the MP_CLK, MP_Valid, and MP_Sync portions of the MPEG data stream to downstream PHY interface 310, while the MP_Data portion of the MPEG data stream are provided to interleaver mux 309. In route to interleaver mux 309, the MP_Data is also passed to idle frame detector 307. Idle frame detector 307 examines the MP_Data portion to determine if it is video data or a null. If video data is detected, then control passes to step 420 and the MP_Data portion is transmitted to downstream PHY interface 310 in the identical form received. If a null is detected then control passes to step 415.

In step 415, interleaver mux 309 replaces the null packet with a DOCSIS data frame provided by DOCSIS data processor (311) and passes the DOCSIS Data portion to downstream PHY 310. In this way DOCSIS data frames are interleaved with MPEG video data to produce an interleaved MPEG data stream. An example interleaved MPEG data stream is illustrated in FIG. 5B. In the example interleaved MPEG data stream 504, the null packets that existed in MPEG video data stream 502 (FIG. 5A) have been replaced with DOCSIS data frames. Thus, the pattern for MPEG video data stream 504 is two MPEG video frames followed by a DOCSIS data frame.

Finally, in step 420, the MPEG data stream is transmitted from downstream PHY interface 310 to downstream modulator 226. In the disclosed embodiment, the MPEG data stream is comprised of MPEG video data frames interleaved with DOCSIS data frames. In an alternative embodiment, no null packets would be available in the MPEG data stream and therefore it would contain only MPEG video data frames.

In transmitting the MPEG data stream to a cable modem, for example, cable modem 106 of FIG. 1, the QAM signal is demodulated, FEC is stripped off and a pure MPEG level 2 transport is presented to the MAC layer of the cable modem 106. The downstream processor of the cable modem 106 will parse the program ID (PID) and determine if the MPEG packet is a valid DOCSIS packet or not. Currently, the only valid DOCSIS PID is the 13 bit value 0x1FFE. If the detected PID is anything other that the valid DOCSIS PID, the MPEG packet received is "dropped" or in other words, not processed. This is because any PID other that the DOCSIS PID indicates non DOCSIS (e.g. VIDEO, NULL) data and thus it is destined for some other receiving device on the cable plant or network.

Alternatively, any device which receives the MPEG data and has no interest in the DOCSIS data, but parses specifically the VIDEO data, will use the video data and not use the DOCSIS data. Cable modem 108 of FIG. 1 is an example of such a device.

In yet another alternative, devices may use both the DOCSIS data and the VIDEO data. As long as the receiving device can parse the PID and process each data stream, there is no technical reason why both DOCSIS data and VIDEO data cannot co-exist in a system definition. In this embodiment, if the device cannot use the VIDEO data, then the VIDEO data is ignored or dropped by the cable modem.

## Claims

1. A system for interleaving MPEG video data with DOCSIS data comprising:
a MPEG video source that produces a MPEG video data stream at a clock rate determined by said MPEG video source, wherein said MPEG video data stream is comprised of MPEG video data packets and null data packets;
a media access control device that receives said MPEG video data stream, replaces each of said null data packets with a DOCSIS data frame to produce an interleaved MPEG data stream, and transmits said interleaved MPEG data stream at said clock rate determined by said MPEG video source.

2. The system of claim 1, further comprising a downstream modulator that receives said interleaved MPEG data stream at said clock rate determined by said MPEG video source.

3. The system of claim 1 or claim 2, wherein said MPEG video source provides said MPEG video data stream at a clock rate less than 13.5 megabytes per second.

4. A system for interleaving MPEG video data with DOCSIS data comprising:
a MPEG video source that produces a MPEG video data stream comprised of MPEG video data packets and a number of null data packets, said number of null data packets determining how much DOCSIS data can be interleaved with said MPEG video data packets;
a media access control device that receives said MPEG video data stream and replaces each of said null data packets with a DOCSIS data frame to produce an interleaved MPEG data stream.

5. A system for interleaving MPEG video data with DOCSIS data comprising:
a MPEG video source that produces a MPEG video data stream at a clock rate determined by said MPEG video source, wherein said MPEG video data stream is comprised of MPEG video data packets and null data packets and further wherein the number of said null data packets determines how much DOCSIS data can be interleaved with said MPEG video data packets;
a media access control device that receives said MPEG video data stream, replaces each of said null data packets with a DOCSIS data frame to produce an interleaved MPEG data stream, and transmits said interleaved MPEG data stream at said clock rate determined by said MPEG video source.

6. A method for interleaving MPEG video data with DOCSIS data, comprising the steps of:
(1) receiving a MPEG video data stream;
(2) detecting one or more null packets within a data portion of said MPEG video data stream; and
(3) replacing each of said one or more null packets with a DOCSIS data frame to produce an interleaved MPEG data stream, wherein said interleaved MPEG data stream comprises MPEG video data and DOCSIS data frames.

7. The method of claim 6, wherein a MPEG video source determines a rate at which said MPEG video data stream is received in said receiving step (1).

8. The method of claim 7, wherein said rate at which said MPEG video data stream is received is less than 13.5 megabytes per second.

9. The method of claim 7 or claim 8, further comprising a step (4) providing said interleaved MPEG data stream to a downstream modulator.

10. The method of claim 9, wherein a rate at which said interleaved MPEG data stream is provided to said downstream modulator is equal to said rate at which said MPEG video data stream is received in said receiving step (a).
